# EUROPÄISCHE PATENTSCHRIFT

(11) **EP 1 568 900 B1**
(45) Veröffentlichungstag und Bekanntmachung des Hinweises auf die Patenterteilung: **25.04.2007**
(21) Anmeldenummer: 05101261.5
(22) Anmeldetag: 18.02.2005
(51) Int. Cl.: F16B 21/12

(54) **Vorrichtung zur Sicherung eines Gegenstands**
Device for securing an object
Dispositif de fixation d'un objet

(30) Priorität: 24.02.2004 DE 102004008949
(43) Veröffentlichungstag der Anmeldung: 31.08.2005
(73) Patentinhaber: DEERE & COMPANY, Moline, Illinois 61265-8098 (US)
(72) Erfinder: Heitlinger, Martin, 76684 Östringen-Odenheim (DE)
(74) Vertreter: Holst, Sönke

(56) Entgegenhaltungen:
- US-A- 216 458
- US-A- 1 107 881
- US-A- 2 158 116
- US-A- 4 511 304
- US-A- 5 934 053

## Beschreibung

Die Erfindung betrifft eine Vorrichtung zur Sicherung eines Gegenstands, mit einem Sicherungsbolzen und einer Sicherungsfeder , gemäß dem Oberbegriff des Anspruchs 1.

Sowohl aus der US 1,107,881 als auch der US 4,511,304 sind jeweils Vorrichtungen zum Sichern eines Gegenstands gemäß dem Oberbegriff des Anspruchs 1 bekannt.

Vorrichtungen der eingangs genannten Art sind seit langem aus dem Stand der Technik bekannt. Lediglich beispielhaft wird auf die deutsche Patentschrift 300802 verwiesen, aus welcher ein Drahtsplint mit einem federnden Sicherungsbügel bekannt ist. Dieser Splint bzw. Bolzen wird üblicherweise in eine Bohrung eines Gegenstands eingeführt, um entweder diesen Gegenstand beispielsweise gegen ein Verdrehen oder ein mit diesem Gegenstand verbundenen weiteren Gegenstand zu sichern. Diese Vorrichtung ist insoweit problematisch, als nur kleine Gegenstände gesichert werden können, da zum Einführen des Bolzens sowie zum Verdrehen der Vorrichtung der Sicherungsbügel entgegen der Federspannung ausgelenkt werden muss. Beispielsweise ist es mit einer solchen Vorrichtung nicht möglich, eine Sperrklinke eines aus der DE 39 12 414 C1 bekannten Kupplungshaken gegen ein Öffnen zu sichern, da die diesbezügliche Bohrung - mit dem dortigen Bezugszeichen 38 - relativ weit vom Außenbereich des Kupplungshakens beabstandet ist. Letztendlich wird bei einer solchen Anwendung beispielsweise eine Sicherung mit Hilfe einer Sechskantschraube und einer Sicherungsmutter erfolgen müssen. Dies ist allerdings insoweit nachteilig, als zur Entsicherung die Sicherungsmutter von der Schraube gelöst werden muss, wobei insbesondere bei landwirtschaftlichen Anwendungen die Gefahr besteht, eines der beiden Teile im Feld zu verlieren.

Der vorliegenden Erfindung liegt daher die Aufgabe zugrunde, eine Vorrichtung der eingangs genannten Art anzugeben und weiterzubilden, durch welche die vorgenannten Probleme überwunden werden. Insbesondere soll die Vorrichtung einteilig oder mehrteilig jedoch unverlierbar zusammenhängend ausgebildet und einfach zu handhaben sein.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß ist die Vorrichtung der eingangs genannten Art dadurch gekennzeichnet, dass die Sicherungsfeder ein Federelement aufweist, welches eine Öffnungsbewegung des von der Sicherungsfeder ausgebildeten Bogens ermöglicht, dieser jedoch entgegenwirkt, dass das Federelement eine Annäherung bzw. Positionierung des Endbereichs der Sicherungsfeder zum zweiten Ende des Sicherungs bolzens hin bewirkt und dass das Federelement derart ausgebildet ist, dass es sich bei einer Öffnungsbewegung der Sicherungsfeder zusammenzieht.

Der im Wesentlichen bügelförmig oder bogenförmig ausgebildete Bereich der Sicherungsfeder kann einen Gegenstand von einer Seite her umschließen und es kann dennoch eine Sicherung eines Gegenstands gewährleistet werden, da - anderes als bei der aus der Patentschrift 300802 bekannten Sicherungsvorrichtung - die Sicherung eben nicht ausschließlich mit Hilfe der Federkraft der Sicherungsfeder erfolgt. Der Bogen bzw. Bügel kann an die entsprechende Anwendung oder auf den speziellen Einsatz angepasst ausgebildet werden. Eine Sicherung mit der erfindungsgemäßen Vorrichtung erfolgt vielmehr vor allem durch ein reversibles Arretieren von der Sicherungsfeder an dem zweiten Endbereich des Sicherungsbolzens. Das reversible Arretieren könnte beispielsweise durch Einklinken eines entsprechend ausgebildeten Bereichs der Sicherungsfeder an dem Sicherungsbolzen erfolgen. Sollte die Arretierung unbeabsichtigt gelöst werden, so wirken die Eigenschaften der Sicherungsfeder - insbesondere deren entsprechend ausgebildete Vorspannung - einem Herausrutschen des Sicherungsbolzens aus einer entsprechenden Bohrung entgegen. Die Sicherungsfeder weist ein Federelement auf, welches eine Öffnungsbewegung des von der Sicherungsfeder ausgebildeten Bogens ermöglicht, dieser jedoch entgegenwirkt. Dieses Federelement könnte somit die grundsätzlich von der Sicherungsfeder bereitgestellte Federwirkung zusätzlich verstärken, so dass aufgrund der hierdurch erhöhten Vorspannung ein Herausrutschen / Herausfallen des Bolzens aus einer dafür vorgesehenen Bohrung bei einem nicht arretierten Zustand der Sicherungsfeder in vorteilhafter Weise weitgehend vermieden wird.

Das Federelement ist erfindungsgemäß derart angeordnet bzw. ausgebildet, dass eine Annäherung bzw. Positionierung des Endbereichs der Sicherungsfeder zum zweiten Ende des Sicherungsbolzens hin bewirkt wird. Diese Maßnahme erleichtert letztendlich die Handhabung der erfindungsgemäßen Vorrichtung, da dann ein Arretieren einfach und ohne Werkzeug möglich ist.

Das Federelement ist erfindungsgemäß auch derart ausgebildet, dass es sich bei einer Öffnungsbewegung der Sicherungsfeder zusammenzieht. Dies bewirkt, dass das Federelement auch bei einer großen Ausdehnung bzw. Öffnungsbewegung wieder in seine ursprüngliche Form zurückkehrt.

Der Sicherungsbolzen ist bevorzugt im Wesentlichen prismen-oder zylinderförmig ausgebildet. Er kann einen wesentlich größeren Durchmesser als der des aus der Patentschrift 300802 bekannten Splints aufweisen. Insoweit können mit der erfindungsgemäßen Vorrichtung in vorteilhafter Weise auch Gegenstände mit größeren Massen gesichert werden.

Nun könnte die reversible Arretierung durch eine ösenförmige Ausbildung eines Endbereichs der Sicherungsfeder realisiert sein. Der ösenförmige Endbereich der Sicherungsfeder könnte hierzu derart auszubilden bzw. auszurichten sein, dass im arretierten Zustand der Vorrichtung der zweite Endbereich des Sicherungsbolzens zumindest weitgehend umgriffen oder umschlossen wird. Der Innendurchmesser des ösenförmigen Endbereichs ist hierbei gleich oder etwas größer als der Außendurchmesser des Sicherungsbolzens. Das arretierte Umgreifen bzw. Umschließen des Sicherungsbolzens könnte dadurch verbessert werden, dass im arretierten Zustand der Vorrichtung die ösenförmige Ausbildung des Endbereichs der Sicherungsfeder in eine am Endbereich des Sicherungsbolzens vorgesehene Nut oder Aussparung eingreift, welche vorzugsweise in umfangsmäßiger Richtung ausgebildet ist. In diesem Fall ist der Innendurchmesser des ösenförmigen Endbereichs gleich oder etwas größer als der Außendurchmesser des Nutbereichs des Sicherungsbolzens. Hierdurch ist eine Bewegung des ösenförmigen Endbereichs der Sicherungsfeder entlang der Sicherungsbolzenlängsachse wirksam vermieden.

Besonders bevorzugt weist der ösenförmig ausgebildete Endbereich der Sicherungsfeder einen im Wesentlichen U-förmigen Bereich auf, dessen Schenkel einen Abstand voneinander aufweisen, welcher ungefähr dem Außendurchmesser des Sicherungsbolzens oder dem Außendurchmesser der am Endbereich des Sicherungsbolzens vorgesehenen Nut entspricht. Mit anderen Worten handelt es sich in diesem konkreten Fall um eine nach einer Seite geöffneten Öse, wobei die Öffnung vorzugsweise zu dem Bügel- bzw. Bogenteil der Sicherungsfeder zeigt. Diese Ausbildung des Endbereichs der Sicherungsfeder ist in vorteilhafter Weise besonders kostengünstig herstellbar. Dementsprechend könnte das Maß der Schenkel des U-förmigen Bereichs mindestens dem einfachen Außendurchmesser des Sicherungsbolzens oder mindestens dem einfachen Außendurchmesser der am Endbereich des Sicherungsbolzens vorgesehenen Nut entsprechen, wodurch ein Umgreifen beziehungsweise Umschließen des Sicherungsbolzens gewährleistet ist. Mit einem größeren Maß des Schenkels des U-förmigen Bereichs ist eine versehentliche Lösung der Arretierung zunehmend unwahrscheinlich.

Weiterhin könnte ein Endbereich der Sicherungsfeder einen gebogenen Bereich mit einem Biegungsradius aufweisen, welcher größer als der einfache Außendurchmesser des Sicherungsbolzens ist. Beim Arretieren kann die Sicherungsfeder derart vom Bediener ausgelenkt werden, dass der Endbereich der Sicherungsfeder mit diesem gebogenen Bereich auf den Sicherungsbolzen bewegbar ist, so dass der U-förmige Bereich in Eingriff mit der Nut gebracht werden kann.

In einer alternativen Ausführungsform könnte die reversible Arretierung dadurch herstellbar sein, dass am zweiten Endbereich des Sicherungsbolzens eine Bohrung vorgesehen ist, in welche der Endbereich der Sicherungsfeder einführbar ist. Die Bohrung könnte quer zur Längsrichtung des Sicherungsbolzens angeordnet sein und beispielsweise im Wesentlichen die gleiche Orientierung aufweisen, wie der Teil der Sicherungsfeder, der an dem ersten Endbereich des Sicherungsbolzens zur Anlage bzw. zu Arretierung kommt. Bevorzugt ist der Endbereich der Sicherungsfeder im Wesentlichen geradlinig ausgebildet, so dass dieses Ende der Sicherungsfeder relativ einfach in die Bohrung des Sicherungsbolzens einführbar ist. Die Bohrung könnte an der Seite, an der die Sicherungsfeder in die Bohrung eingeführt wird, einen konischen Bereich aufweisen, so dass das Einführen des Sicherungsfederendes durch erleichtert wird.

Nun könnte der Sicherungsbolzen und die Sicherungsfeder grundsätzlich einteilig ausgebildet sein. Falls jedoch der Durchmesser des Sicherungsbolzens größer als der der Sicherungsfeder ist, ist eine zweiteilige Ausbildung der erfindungsgemäßen Vorrichtung geboten, um letztendlich die Federwirkung der Sicherungsfeder zu gewährleisten. Bevorzugt ist hierzu die Sicherungsfeder an dem ersten Endbereich des Sicherungsbolzens spiralenförmig mindestens einmal um den Sicherungsbolzen gewickelt. Der Innendurchmesser der Federwicklung entspricht hierbei im Wesentlichen dem Außendurchmesser des Sicherungsbolzens.

Das Ende der Sicherungsfeder könnte einen gebogenen Zapfen aufweisen, welcher in eine im Wesentlichen quer zur Längsrichtung des Sicherungsbolzens vorgesehene Aussparung des Sicherungsbolzens verklemmbar ist. Eine solche Verbindung stellt in besonders vorteilhafter Weise einerseits sicher, dass die Feder oder der Bolzen nicht verloren geht und ermöglicht andererseits eine kostengünstige Herstellung.

Die Sicherungsfeder könnte an dem Sicherungsbolzen auch dadurch befestigt werden, dass der erste Endbereich des Sicherungsbolzens eine im Wesentlichen quer zur Längsrichtung des Sicherungsbolzens verlaufende Bohrung aufweist, durch welche das Ende der Sicherungsfeder sich erstreckt. Nun könnte grundsätzlich vorgesehen sein, die Sicherungsfeder mit den Sicherungsbolzen zu verschweißen und/oder die Sicherungsfeder in der Bohrung zu verklemmen. Alternativ oder zusätzlich könnte die Sicherungsfeder mit einem Überstand durch die Bohrung eingeführt werden und dieser Überstand des Sicherungsfederendes könnte beispielsweise um 90 Grad verbogen oder lediglich einmal um den Sicherungsbolzen gewunden sein. Hierdurch kann eine noch kostengünstigere Herstellung der erfindungsgemäßen Vorrichtung erreicht werden.

Damit sichergestellt ist, dass die Sicherungsfeder und/oder das Federelement stets in die ursprüngliche Form zurückgekehrt, ist das Federelement derart bemessen, dass zumindest bezüglich der Öffnungsbewegung das Hook'sche Gesetz gilt.

Das Federelement könnte mindestens eine Wicklung der Sicherungsfeder aufweisen, wobei das Federelement durch diese Maßnahme ganz besonders kostengünstig hergestellt werden kann. Ganz besonders bevorzugt sind vier spiralenförmige Wicklungen vorgesehen, wodurch letztendlich - in Abhängigkeit der Materialeigenschaften der Sicherungsfeder - eine bestimmte Federkonstante bereitgestellt werden kann. Das Federelement bzw. die Windung(en) ist vorzugsweise in einem dem Sicherungsbolzen gegenüberliegenden Bereich der Sicherungsfeder angeordnet.

Bevorzugt liegt eine Wicklung bzw. die Wicklungen in einer Ebene, welche im Wesentlichen parallel zu der Ebene ist, in welcher der Bogen bzw. der Bügel der Sicherungsfeder liegt. Alternativ könnte die Wicklung in einer Ebene liegen, welche im Wesentlichen orthogonal zu der Ebene ist, in welcher der Bogen bzw. der Bügel der Sicherungsfeder liegt.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Patentansprüche und andererseits auf die nachfolgende Erläuterung der bevorzugten Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen jeweils in einer schematischen Darstellung in
- Fig. 1: eine perspektivische Ansicht eines ersten Ausführungsbeispiels der erfindungsgemäßen Sicherungsvorrichtung im arretierten Zustand,
- Fig. 2: eine perspektivische Ansicht des Ausführungsbeispiels aus Figur 1 in einem nicht arretierten Zustand,
- Fig. 3: eine alternative perspektivische Ansicht des Ausführungsbeispiels aus Figur 2, wobei zur Verdeutlichung die Feder teilweise geöffnet dargestellt ist,
- Fig. 4: eine perspektivische Ansicht der Sicherungsvorrichtung aus den Figuren 1 bis 3, welche in einem Fanghaken eines Unterlenkers eines Traktors eingesetzt ist,
- Fig. 5: eine Seitenansicht eines zweiten Ausführungsbeispiels der erfindungsgemäßen Sicherungsvorrichtung in einem arretierten Zustand und
- Fig. 6: eine Seitenansicht eines dritten Ausführungsbeispiels der erfindungsgemäßen Sicherungsvorrichtung in einem arretierten Zustand.

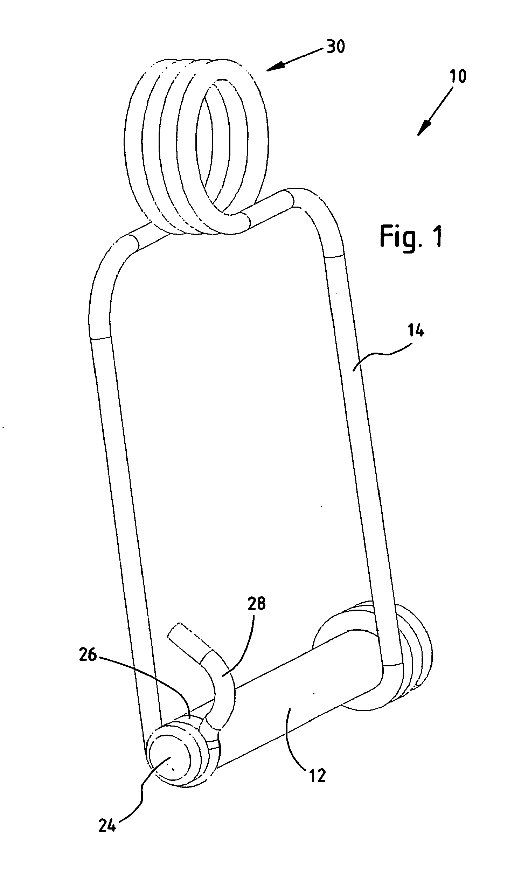

In den Figuren sind gleiche oder ähnliche Bauteile mit denselben Bezugszeichen gekennzeichnet. Die Figuren 1 bis 3 zeigen ein erstes Ausführungsbeispiel einer erfindungsgemäßen Vorrichtung 10 zur Sicherung eines Gegenstands. Die Vorrichtung 10 umfasst einen zylinderförmig ausgebildeten Sicherungsbolzen 12 und eine Sicherungsfeder 14.

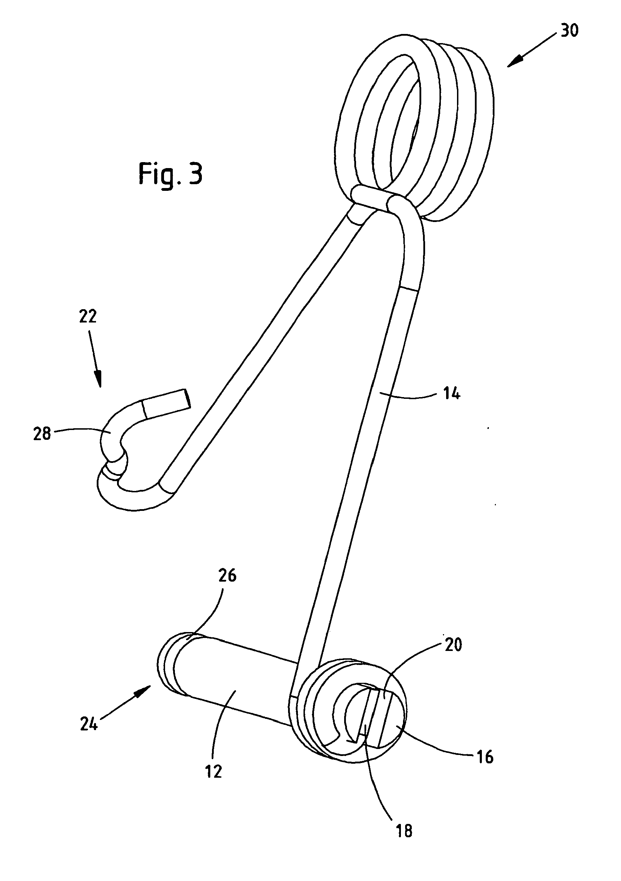

Die Sicherungsfeder 14 ist am ersten Endbereich 16 des Sicherungsbolzens 12 unverlierbar befestigt, was Figur 3 besonders deutlich entnehmbar ist. Diese Befestigung ist durch eine dreifache Wicklung der Sicherungsfeder 14 um den ersten Endbereich 16 des Sicherungsbolzens 12 in Verbindung mit einem gebogenen Zapfen 18 realisiert, wobei der gebogene Zapfen 18 das eine Ende der Sicherungsfeder 14 darstellt. Dieser gebogene Zapfen 18 ist in der Aussparung 20 verklemmt. Die Aussparung 20 ist im Wesentlichen quer zur Längsrichtung des Sicherungsbolzens 12 vorgesehen und weist eine Breite auf, die etwas größer als der Außendurchmesser des gebogenen Zapfens 18 der Sicherungsfeder 14 ist.

Zur Montage der Sicherungsfeder 14 auf den Sicherungsbolzen 12 wird der spiralenförmige Endbereich der Sicherungsfeder 14 auf den Sicherungsbolzen 12 aufgesteckt und derart orientiert, dass der gebogene Zapfen 18 in der Aussparung 20 - wie in Figur 3 gezeigt - angeordnet ist. Sodann wird der erste Endbereich 16 des Sicherungsbolzens 12 zusammengedrückt, so dass der gebogene Zapfen 18 in der Aussparung 20 verklemmt wird. Hierdurch ist auf einfache, kostengünstige und wirksame Weise eine feste Verbindung zwischen Sicherungsfeder 14 und Sicherungsbolzen 12 gewährleistet.

Das andere Ende der Sicherungsfeder 14 umfasst einen gebogenen Bereich 22, welcher zur reversiblen Arretierung der Sicherungsfeder 14 am Sicherungsbolzen 12 dient. Der gebogene Bereich 22 umgreift im arretierten Zustand zumindest teilweise den Sicherungsbolzen 12 und ist im Wesentlichen ösenförmig ausgebildet. Am zweiten Endbereich 24 des Sicherungsbolzens 12 ist eine Nut 26 vorgesehen, in welche der gebogene Bereich 22 der Sicherungsfeder 14 im arretierten Zustand eingreift, siehe Figur 1. Die Nut 26 ist nicht ganz so tief wie der Außendurchmesser der Sicherungsfeder 14 in dem gebogenen Bereich 22 ausgebildet. Dementsprechend entspricht der Innenradius des gebogenen Bereichs 22 im Wesentlichen dem Außenradius des Bereichs des Sicherungsbolzens 12, an dem die Nut 26 vorgesehen ist. Die Nut 26 ist geringfügig breiter als der Außendurchmesser der Sicherungsfeder 14 in dem gebogenen Bereich 22. Der gebogene Bereich 22 ist in dem Bereich, in dem er mit der Nut 26 in Eingriff kommt, im Wesentlichen U-förmig ausgebildet. Aufgrund dieser Ausbildung des zweiten Endbereichs 24 des Sicherungsbolzens im Zusammenspiel mit dem gebogenen Bereich 22 der Sicherungsfeder 14 kann der gebogene Bereich 22 im arretierten Zustand nicht entlang der Sicherungsbolzenlängsachse bewegt werden.

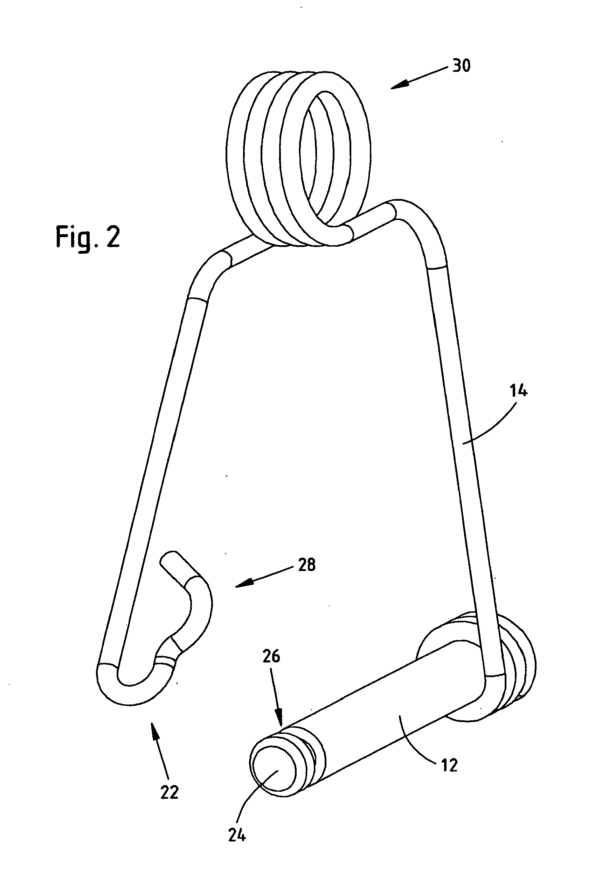

Der gebogene Bereich 22 umfasst weiterhin einen gebogenen Bereich 28, welcher einen Innenradius aufweist, der größer als der einfache Außendurchmesser des Sicherungsbolzens 12 ist. Zum Arretieren der in Figur 2 gezeigten Sicherungsfeder 14 ist das freie Ende der Sicherungsfeder 14 derart in die Nähe des zweiten Endbereichs 24 des Sicherungsbolzens 12 auszulenken bzw. zu bringen, dass das freie Ende der Sicherungsfeder 14 mit ihrem gebogenen Bereich 28 auf den Sicherungsbolzen 12 aufgeschoben werden kann. Sobald der gebogene Bereich 28 im Bereich der Nut 26 ist, bewegt sich aufgrund einer entsprechenden Federvorspannung der Endbereich 22 derart, dass der U-förmige Bereich des gebogenen Bereichs 22 in Eingriff in die Nut 26 kommt. Das Lösen der Arretierung erfolgt entsprechend umgekehrt. Insoweit kann die erfindungsgemäße Vorrichtung zur Sicherung von Gegenständen in ganz besonders vorteilhafter Weise ohne jegliches Werkzeug arretiert bzw. gelöst werden.

Die Sicherungsfeder 14 weist ein Federelement 30 auf, welches aus vier Wicklungen aus dem Material der Sicherungsfeder 14 besteht. Die Wicklungen sind derart orientiert, dass sie in einer Ebene liegen, die im Wesentlichen parallel zu der Ebene ist, in der der bogenförmig ausgebildete Teil der Sicherungsfeder 14 liegt. Hierbei ist das Federelement 30 in einem Bereich des Bogens der Sicherungsfeder 14 angeordnet, der dem Sicherungsbolzen 12 gegenüber liegt. Das Federelement 30 ist derart ausgebildet, dass es einer Öffnungsbewegung des freien Endes der Sicherungsfeder 14 entgegenwirkt. Eine Öffnungsbewegung von bis zu 180 Grad ist hierbei problemlos möglich, in der Regel wird eine Öffnungsbewegung von bis zu 90 Grad zur Montage der Vorrichtung an einem Gegenstand ausreichen. Die Wicklungen des Federelements 30 sind derart ausgebildet, dass bei einer Öffnungsbewegung der Sicherungsfeder 14 das Federelement sich zusammenzieht. Das Federelement 30 ist hinsichtlich seiner Federkonstante derart bemessen, dass eine Öffnungsbewegung der Sicherungsfeder 14 von bis zu 180 Grad problemlos möglich ist und dass zumindest für eine solche Öffnungsbewegung das Hook'sche Gesetz gilt.

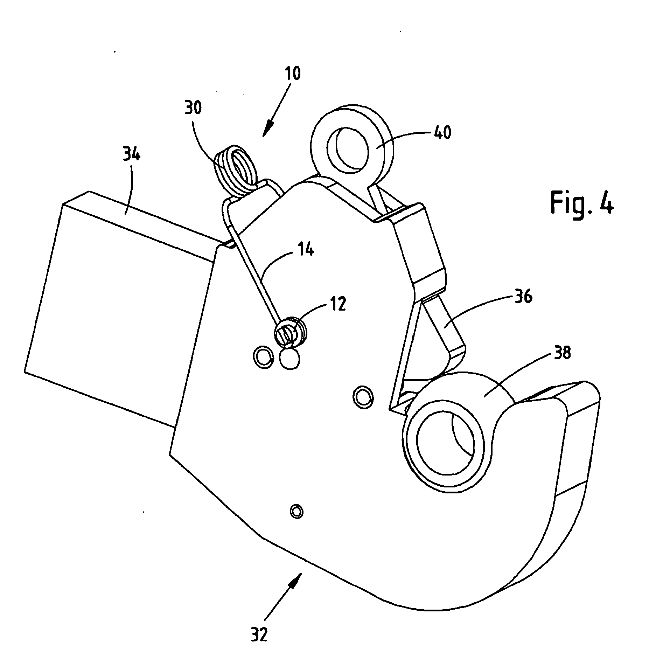

In Figur 4 ist der Einsatz der Vorrichtung 10 an einem Fanghaken 32 eines - nur zum Teil gezeigten - Unterlenkers 34 gezeigt, welcher beispielsweise bei einem Dreipunkt-Geräteaufbau an einem Traktor angeordnet sein könnte. Der Fanghaken 32 umfasst eine Sperrklinke 36, mit welcher eine Lagerkugel 38 am Fanghaken 32 arretiert werden kann. Die Lagerkugel 38 ist üblicherweise der Kopplungsvorrichtung eines - in Figur 4 nicht gezeigten - Arbeitsgeräts zugeordnet. Die Sperrklinke 36 kann mit dem Betätigungsteil 40 entriegelt werden, jedoch nur dann, wenn der Sicherungsbolzen 12 sich nicht durch die Gehäusebohrungen des Fanghakens 32 erstreckt. In dem in Figur 4 gezeigten Zustand des Fanghakens 32 ist die Sperrklinke 36 verriegelt. Figur 4 ist entnehmbar, dass die Sicherungsfeder 14 nahezu optimal an die Form des Fanghakens 32 angepasst ist. Aufgrund der Ausbildung der erfindungsgemäßen Vorrichtung mit der Sicherungsfeder 14 ist zumindest weitgehend sichergestellt, dass der Sicherungsbolzen 12 sich auch im nicht arretierten Zustand nicht ohne weiteres aus dem Gehäuse des Fanghakens 32 entfernen kann, da aufgrund der Federeigenschaften des Sicherungsfeder 14 im Zusammenspiel mit dem Federelement 30 das freie Ende 22 der Sicherungsfeder 14 am Gehäuse des Fanghakens 32 anliegt.

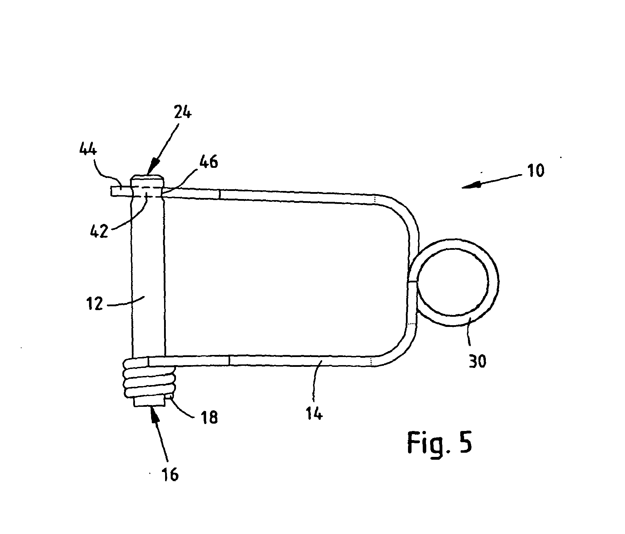

Figur 5 zeigt ein zweites Ausführungsbeispiel der erfindungsgemäßen Vorrichtung 10. Hierbei ist die Sicherungsfeder 14 am ersten Endbereich 16 des Sicherungsbolzens 12 vergleichbar zu dem ersten Ausführungsbeispiel der Figuren 1 bis 3 befestigt.

Die reversible Arretierung ist gemäß diesem Ausführungsbeispiel dadurch herstellbar, dass am zweiten Endbereich 24 des Sicherungsbolzens 12 eine Bohrung 42 vorgesehen ist, in welche der Endbereich 44 der Sicherungsfeder 14 einführbar ist. Die Bohrung 42 ist hierbei quer zur Längsrichtung des Sicherungsbolzens 12 angeordnet und weist im Wesentlichen die gleiche Orientierung auf, wie der Teil der Sicherungsfeder 14, der an dem ersten Endbereich 16 des Sicherungsbolzens 12 zur Anlage bzw. zu Arretierung kommt. Der Endbereich 44 der Sicherungsfeder 14 ist im Wesentlichen geradlinig ausgebildet, so dass dieses Ende der Sicherungsfeder 14 relativ einfach in die Bohrung 42 des Sicherungsbolzens 12 einführbar ist. Die Bohrung weist daher an der Seite, an der die Sicherungsfeder 14 in die Bohrung 42 eingeführt wird, einen konischen Bereich 46 auf (lediglich schematisch angedeutet), so dass das Einführen des Sicherungsfederendes 44 erleichtert wird.

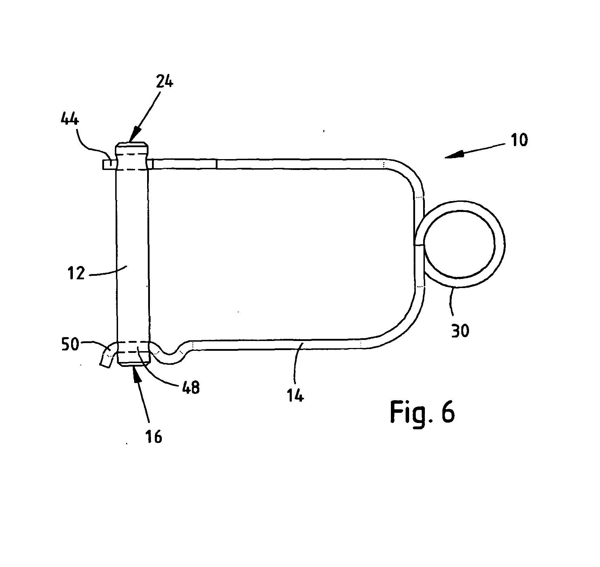

Figur 6 zeigt ein zu Figur 5 vergleichbares drittes Ausführungsbeispiel, bei welchem die Sicherungsfeder 14 an dem Sicherungsbolzen 12 dadurch befestigt ist, dass der erste Endbereich 16 des Sicherungsbolzens 12 eine im Wesentlichen quer zur Längsrichtung des Sicherungsbolzens 12 verlaufende Bohrung 48 aufweist, durch welche das Ende 50 der Sicherungsfeder 14 sich erstreckt. Die Sicherungsfeder ist zur unverlierbaren Arretierung an dem Sicherungsbolzen 12 in der Bohrung 48 verklemmt. Zusätzlich weist die Sicherungsfeder 14 einen Überstand bzw. überstehendes Ende 50 auf, der/das durch die Bohrung 48 eingeführt werden kann. Dieser Überstand des Sicherungsfederendes 50 ist um ca. 60 Grad verbogen. Durch das Verklemmen und/oder das Verbiegen kann eine noch kostengünstigere Herstellung der erfindungsgemäßen Vorrichtung realisiert werden.

Abschließend sei ganz besonders darauf hingewiesen, dass die voranstehend erörterten Ausführungsbeispiele lediglich zur Beschreibung der beanspruchten Lehre dienen, diese jedoch nicht auf die Ausführungsbeispiele einschränken.

## Patentansprüche

1. Vorrichtung zur Sicherung eines Gegenstands (36), mit einem Sicherungsbolzen (12) und einer Sicherungsfeder (14), wobei die Sicherungsfeder (14) an einem ersten Endbereich (16) des Sicherungsbolzens (12) unverlierbar befestigt ist, wobei die Sicherungsfeder (14) sich von dem ersten Endbereich (16) des Sicherungsbolzens (12) im Wesentlichen bügelförmig oder bogenförmig zu einem zweiten Endbereich (24) des Sicherungsbolzens (12) erstreckt und hierbei im Betriebszustand einen Gegenstand (32) von einer Seite her umschließt, wobei die Sicherungsfeder (14) an dem zweiten Endbereich (24) des Sicherungsbolzens (12) reversibel arretierbar ist, **dadurch gekennzeichnet, dass** die Sicherungsfeder (14) ein Federelement (30) aufweist, welches eine Öffnungsbewegung des von der Sicherungsfeder (14) ausgebildeten Bogens ermöglicht, dieser jedoch entgegenwirkt, dass das Federelement (30) eine Annäherung bzw. Positionierung des Endbereichs der Sicherungsfeder (14) zum zweiten Ende (24) des Sicherungsbolzens (12) hin bewirkt und dass das Federelement (30) derart ausgebildet ist, dass es sich bei einer Öffnungsbewegung der Sicherungsfeder (14) zusammenzieht.

2. Vorrichtung nach Anspruch 1, **dadurch gekennzeichnet, dass** der Sicherungsbolzen (12) im Wesentlichen prismen- oder zylinderförmig ausgebildet ist und/oder dass die reversible Arretierung durch eine ösenförmige Ausbildung eines Endbereichs der Sicherungsfeder (14) realisierbar ist, welche im arretierten Zustand der Vorrichtung den zweiten Endbereich (24) des Sicherungsbolzens (12) zumindest weitgehend umgreift.

3. Vorrichtung nach Anspruch 2, **dadurch gekennzeichnet, dass** im arretierten Zustand der Vorrichtung (10) die ösenförmige Ausbildung des Endbereichs der Sicherungsfeder (14) in eine am Endbereich des Sicherungsbolzens (12) vorgesehene Nut (26) eingreift, welche vorzugsweise in umfangsmäßiger Richtung ausgebildet ist.

4. Vorrichtung nach Anspruch 2 oder 3, **dadurch gekennzeichnet, dass** der ösenförmig ausgebildete Endbereich der Sicherungsfeder (14) einen im Wesentlichen U-förmigen Bereich (22) aufweist, dessen Schenkel einen Abstand voneinander aufweisen, welcher ungefähr dem Außendurchmesser des Sicherungsbolzens (12) oder dem Außendurchmesser der am Endbereich (24) des Sicherungsbolzens (12) vorgesehenen Nut (26) entspricht und dass vorzugsweise das Maß der Schenkel des U-förmigen Bereichs (22) mindestens dem einfachen Außendurchmesser des Sicherungsbolzens (12) oder mindestens dem einfachen Außendurchmesser der am Endbereich (24) des Sicherungsbolzens (12) vorgesehenen Nut (26) entspricht.

5. Vorrichtung nach einem der Ansprüche 2 bis 4, **dadurch gekennzeichnet, dass** ein Endbereich der Sicherungsfeder (14) einen gebogenen Bereich (28) mit einem Biegungsradius aufweist, welcher größer als der einfache Außendurchmesser des Sicherungsbolzens (12) ist.

6. Vorrichtung nach Anspruch 1, **dadurch gekennzeichnet, dass** die reversible Arretierung **dadurch** herstellbar ist, dass am zweiten Endbereich (24) des Sicherungsbolzens (12) eine Bohrung vorgesehen ist, in welche der Endbereich der - vorzugsweise im Wesentlichen geradlinig ausgebildeten - Sicherungsfeder (14) einführbar ist, wobei die Bohrung insbesondere quer zur Längsrichtung des Sicherungsbolzens (12) angeordnet ist.

7. Vorrichtung nach einem der Ansprüche 1 bis 6, **dadurch gekennzeichnet, dass** die Sicherungsfeder (14) an dem ersten Endbereich (16) des Sicherungsbolzens (12) spiralenförmig mindestens einmal um den Sicherungsbolzen (12) gewickelt ist, und dass vorzugsweise das Ende der Sicherungsfeder (14) einen gebogenen Zapfen (18) aufweist, welcher in eine im Wesentlichen quer zur Längsrichtung des Sicherungsbolzens (12) vorgesehene Aussparung (20) des Sicherungsbolzens (12) verklemmbar ist.

8. Vorrichtung nach einem der Ansprüche 1 bis 7, **dadurch gekennzeichnet, dass** der erste Endbereich (16) des Sicherungsbolzens (12) eine im Wesentlichen quer zur Längsrichtung des Sicherungsbolzens (12) verlaufende Bohrung aufweist, durch welche das Ende der Sicherungsfeder sich - vorzugsweise mit einem Überstand - erstreckt, und dass ein gegebenenfalls vorgesehener Überstand der Sicherungsfeder (14) verbogen ist, wobei insbesondere die Sicherungsfeder (14) in der Bohrung verklemmt angeordnet ist.

9. Vorrichtung nach Anspruch 1, **dadurch gekennzeichnet, dass** das Federelement (30) derart bemessen ist, dass zumindest bezüglich der Öffnungsbewegung das Hook'sche Gesetz gilt und/oder dass das Federelement (30) mindestens eine - vorzugsweise vier - spiralenförmige Wicklung(en) der Sicherungsfeder (14) aufweist, welche vorzugsweise in einem dem Sicherungsbolzen (12) gegenüberliegenden Bereich der Sicherungsfeder (14) angeordnet ist.

10. Vorrichtung nach Anspruch 9, **dadurch gekennzeichnet, dass** eine Wicklung in einer Ebene liegt, welche im Wesentlichen parallel oder orthogonal zu der Ebene ist, in welcher der Bogen bzw. der Bügel der Sicherungsfeder (14) liegt.

## Claims

1. A device for securing an object (36), with a securing bolt (12) and a securing spring (14), wherein the securing spring (14) is fixed captive on a first end region (16) of the securing bolt (12), wherein the securing spring (14) extends essentially in the shape of a bow or a loop from the first end region (16) of the securing bolt (12) to a second end region (24) of the securing bolt (12) and in the working state embraces an object (32) from one side, wherein the securing spring (14) can arrested reversibly on the second end region (24) of the securing bolt (12), **characterized in that** the securing spring (14) comprises a spring element (30) which enables an opening movement of the loop formed by the securing spring (14), **in that** the spring element (30) counteracts an approach or positioning of the end region of the securing spring (14) to the second end (24) of the securing bolt (12) and **in that** the spring element (30) is so formed that it contracts with an opening movement of the securing spring (14).

2. A device according to claim 1, **characterized in that** the securing bolt (12) is of substantially prismatic or cylindrical form and/or **in that** the reversible arresting is realised by a eye shaped formation of an end region of the securing spring (14), which in the arrested state of the device at least largely embraces the second end region (24) of the securing bolt (12).

3. A device according to claim 2, **characterized in that**, in the arrested state of the device (10), the eye shaped formation of the end region of the securing spring (14) engages in a groove (26) which is provided at the end region of the securing bolt (12) and is preferably formed in the peripheral direction.

4. A device according to claim 2 or 3, **characterized in that** the eye formed end region of the securing spring (14) has a substantially U-shaped region (22) whose sides have a spacing from one another which corresponds approximately to the outer diameter of the securing bolt (12) or the outer diameter of the groove (26) provided in the end region (24) of the securing bolt (12), and **in that** the size of the arms of the U-shaped region (22) preferably corresponds to at least one outer diameter of the securing bolt (12) or at least one outer diameter of the groove (26) provided in the end region (24) of the securing bolt (12).

5. A device according to any of claims 2 to 4, **characterized in that** one end region of the securing spring (14) has an arcuate region (28) with a radius of the arc which is greater than one outer diameter of the securing bolt (12).

6. A device according to claim 1, **characterized in that** the reversible arresting can be produced **in that** the a bore is provided in the second end region (24) of the securing bolt (12), into which the end region of the securing spring (14) - preferably of substantially straight form - can be introduced, the bore being in particular disposed transverse to the longitudinal direction of the securing bolt (12).

7. A device according to any of claims 1 to 6, **characterized in that** the securing spring (14) is wound in spiral form at least once round the first end region (16) of the securing bolt (12), and **in that** the end of the securing spring (14) preferably has a bent tongue (18) which can be wedged in a recess (20) of the securing bolt (12) provided substantially transverse to the longitudinal direction of the securing bolt (12).

8. A device according to any of claims 1 to 7, **characterized in that** the first end region (16) of the securing bolt (12) has a bore running substantially transverse to the longitudinal direction of the securing bolt (12), through which the end of the securing spring extends - preferably with an excess length - and **in that** an excess length of the securing spring (14) which may be provided is bent, whereby in particular the securing spring (14) is wedged in the bore.

9. A device according to claim 1, **characterized in that** the spring element (30) is so dimensioned that Hooke's law applies at least in relation to the opening movement and/or that the spring element (30) has at least one - preferably four - windings of spiral form of the securing spring (14), which is preferably arranged in a region of the securing spring (14) opposite the securing bolt (12).

10. A device according to claim 9, **characterized in that** a winding lies in a plane which lies substantially parallel or orthogonal to the plane in which the bow or loop of the securing spring (14) lies.

## Revendications

1. Dispositif pour fixer un objet (36), comprenant un boulon de blocage (12) et un ressort de blocage (14), le ressort de blocage (14) étant fixé de façon imperdable sur une première zone d'extrémité (16) du boulon de blocage (12), le ressort de blocage (14) s'étendant depuis la première zone d'extrémité (16) du boulon de blocage (12) principalement en forme de bride ou d'arc vers une seconde zone d'extrémité (24) du boulon de blocage (12) et entourant ici dans l'état de service un objet (32) à partir d'un côté, le ressort de blocage (14) pouvant être bloqué de façon réversible sur la seconde zone d'extrémité (24) du boulon de blocage (12), **caractérisé en ce que** le ressort de blocage (14) présente un élément de ressort (30) qui permet un mouvement d'ouverture de l'arc formé par le ressort de blocage (14), mais s'oppose à celui-ci, **en ce que** l'élément de ressort (30) entraîne un rapprochement ou un positionnement de la zone d'extrémité du ressort de blocage (14) en direction de la seconde extrémité (24) du boulon de blocage (12) et **en ce que** l'élément de ressort (30) est conçu de telle sorte qu'il se rétracte lors d'un mouvement d'ouverture du ressort de blocage (14).

2. Dispositif selon la revendication 1, **caractérisé en ce que** le boulon de blocage (12) est conçu sensiblement en forme de prisme ou de cylindre et/ou **en ce que** le blocage réversible peut être réalisé par une réalisation en forme d'anneau d'une zone d'extrémité du ressort de blocage (14), qui, dans un état bloqué du dispositif, entoure au moins largement la seconde zone d'extrémité (24) du boulon de blocage (12).

3. Dispositif selon la revendication 2, **caractérisé en ce que**, dans un état bloqué du dispositif (10), la réalisation en forme d'anneau de la zone d'extrémité du ressort de blocage (14) s'engage dans une rainure (26) prévue sur la zone d'extrémité du boulon de blocage (12), laquelle est réalisée de préférence dans le sens périphérique.

4. Dispositif selon la revendication 2 ou 3, **caractérisé en ce que** la zone d'extrémité, conçue en forme d'anneau, de ressort de blocage (14) présente une zone (22) sensiblement en U, dont les branches présentent un espacement qui correspond à peu près au diamètre extérieur du boulon de blocage (12) ou au diamètre extérieur de la rainure (26) prévue sur la zone d'extrémité (24) du boulon de blocage (12) et **en ce que** de préférence la côte des branches de la zone (22) en U correspond au moins au simple diamètre extérieur du boulon de blocage (12) ou au moins au simple diamètre extérieur de la rainure (26) prévue sur la zone d'extrémité (24) du boulon de blocage (12).

5. Dispositif selon l'une quelconque des revendications 2 à 4, **caractérisé en ce qu'**une zone d'extrémité du boulon de blocage (14) présente une zone (28) courbée avec un rayon de courbure qui est supérieur au simple diamètre extérieur du boulon de blocage (12).

6. Dispositif selon la revendication 1, **caractérisé en ce que** le blocage réversible peut être fabriqué par le fait que sur la seconde zone d'extrémité (24) du boulon de blocage (12) est prévu un perçage dans lequel la zone d'extrémité du ressort de blocage (14), conçu de préférence sensiblement rectiligne, doit être introduite, le perçage étant disposé en particulier transversalement à la direction longitudinale du boulon de blocage (12).

7. Dispositif selon l'une quelconque des revendications 1 à 6, **caractérisé en ce que** le ressort de blocage (14) est enroulé sur la première zone d'extrémité (16) du boulon de blocage (12) en forme de spirale au moins une fois autour du boulon de blocage (12) et **en ce que** de préférence l'extrémité du ressort de blocage (14) présente un pivot (18) courbé, qui peut être coincé dans un évidement (20), prévu essentiellement transversalement à la direction longitudinale du boulon de blocage (12), du boulon de blocage (12).

8. Dispositif selon l'une quelconque des revendications 1 à 7, **caractérisé en ce que** la première zone d'extrémité (16) du boulon de blocage (12) présente un perçage agencé sensiblement transversalement à la direction longitudinale du boulon de blocage (12), par lequel l'extrémité du ressort de blocage s'étend, de préférence avec un dépassement, et **en ce qu'**un dépassement, éventuellement prévu, du ressort de blocage (14) est plié, en particulier le ressort de blocage (14) étant disposé coincé dans le perçage.

9. Dispositif selon la revendication 1, **caractérisé en ce que** l'élément de ressort (30) est dimensionné de telle sorte que la loi de Hook s'applique au moins en ce qui concerne le mouvement d'ouverture et/ou l'élément de ressort (30) présente au moins un, de préférence quatre enroulement(s) en forme de spirale du ressort de blocage (14), qui est disposé de préférence dans une zone, faisant face au boulon de blocage (12), du ressort de blocage (14).

10. Dispositif selon la revendication 9, **caractérisé en ce qu'**un enroulement est disposé dans un plan qui est sensiblement parallèle ou perpendiculaire au plan dans lequel est disposé l'arc ou la bride du ressort de blocage (14).
